# EUROPEAN PATENT SPECIFICATION

(11) **EP 0 686 548 B1**
(45) Date of publication and mention of the grant of the patent: **16.09.1998**
(21) Application number: 95107985.4
(22) Date of filing: 24.05.1995
(51) Int. Cl.: B62M 7/04, B62M 23/02

(54) **Gear box structure in motor-assisted bicycle**
Struktur des Getriebegehäuses eines Fahrrads mit Hilfsmotor
Structure de boîte de vitesses d'une bicyclette avec moteur auxiliaire

(30) Priority: 11.06.1994 JP 152721/94
(43) Date of publication of application: 13.12.1995
(73) Proprietor: HONDA GIKEN KOGYO KABUSHIKI KAISHA, Minato-ku Tokyo (JP)
(72) Inventor: Kuroki, Masahiro, c/o K.K. Honda Gijutsu Kenkyusho, Wako-shi, Saitama (JP)
(74) Representative: Liska, Horst, Dr.-Ing.

(56) References cited:
- EP-A- 0 168 905
- GB-A- 2 249 529
- PATENT ABSTRACTS OF JAPAN vol. 17, no. 697 (M-1532), 20 December 1993 & JP-A-05 238461 (YAMAHA MOTOR CO LTD), 17 September 1993,
- PATENT ABSTRACTS OF JAPAN vol. 18, no. 136 (M-1572), 7 March 1994 & JP-A-05 319104 (YAMAHA MOTOR CO LTD), 3 December 1993,

## Description

### DETAILED DESCRIPTION OF THE INVENTION

### Field of the Invention

The present invention relates to a motor-assisted bicycle having a motor to use motive power of said motor for assisting man power propelling the bicycle, and more particularly to a gear box structure for reduction gears in the motor-assisted bicycle.

### Prior Art

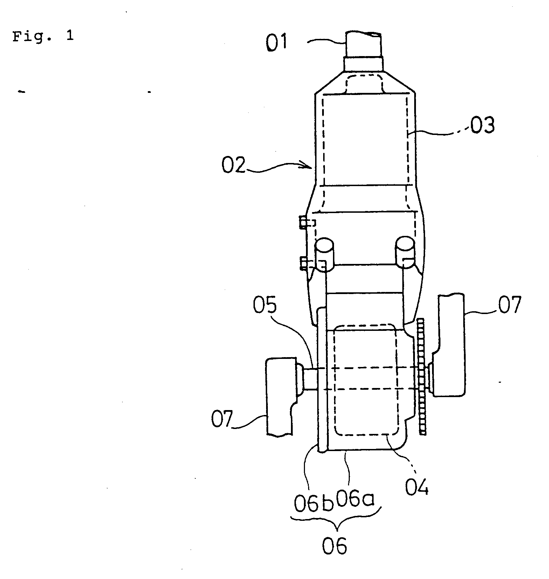

In a motor-assisted bicycle, a motor is provided in a power transmitting system for transmitting a depression force applied to crank pedals to a wheel, and an output from the motor is controlled according to the depression force applied to the crank pedals. Fig. 1 shows a part of a conventional motor-assisted bicycle described in Japanese Patent Laid-open No. 5-319104. As shown in Fig. 1, a motor unit 02 is provided at a lower portion of a seat tube 01. Motive power generated from a motor 03 provided in the motor unit 02 is reduced in speed by a gear mechanism 04 having a one-way clutch, and is transmitted to a crankshaft 05, thereby assisting man power propelling the bicycle.

The gear mechanism 04 is provided on the crankshaft 05, and is covered with a gear box 06.

The gear box 06 is composed of a cylindrical portion 06a having a bottom and a substantially disk-shaped cover portion 06b. The crankshaft 05 passes through the cylindrical portion 06a so as to lie on the cylindrical axis of the cylindrical portion 06a. The cover portion 06b covers a left opening of the cylindrical portion 06a, and is bolted to the cylindrical portion 06a.

### Problem to be Solved by the Invention

In performing the maintenance of the gear mechanism, the cover portion 06b is removed from the cylindrical portion 06a. However, a left crank arm 07 mounted on the crankshaft 05 hinders complete removal of the cover portion 06b from the vehicle, and it is therefore difficult for an operator to see the gear mechanism inside the cylindrical portion 06a.

Accordingly, the left crank arm 07 must be removed from the crankshaft 05, so as to completely remove the cover portion 06b from the vehicle. Such a demounting work is troublesome.

Even if the cover portion 06b is completely removed from the vehicle, it is difficult for the operator to see a gear train located in the depth of the cylindrical portion 06a. Therefore, a lubricated condition inside the cylindrical portion 06a is hard to carefully check, and the gear mechanism is also hard to oil.

Accordingly, the motor unit 02 must be disassembled in order to ensure the maintenance of the gear mechanism, causing a very troublesome work.

It is accordingly an object of the present invention to provide a gear box structure which allows the operator to easily and reliably perform the maintenance of the gear mechanism.

### Means and Operation of Solving the Problem

In a motor-assisted bicycle having a motor to use motive power of the motor for assisting man power propelling the bicycle; there is provided a gear box structure characterized in that a gear mechanism for reducing the motive power of the motor in speed and then transmitting it to a wheel is stored in a gear box, and the gear box is located at a lowermost portion of a vehicle body frame; and the gear box is dividable into an upper box portion supporting the gear mechanism and a lower box portion.

The gear box is located at the lowermost portion of the vehicle body frame, and the gear box is dividable into the upper box portion and the lower box portion. Accordingly, the lower box portion can be easily removed from the upper box portion. In the condition where the lower box portion is removed, the gear mechanism supported in the upper box portion is substantially exposed to the outside of the gear box, thereby making the maintenance easy.

Preferably, the lower box portion of the gear box is dividable from the upper box portion of the gear box along a substantially horizontal parting surface in a condition where the motor-assisted bicycle is turned upside down to be supported at a handle and a seat of the motor-assisted bicycle. With this arrangement, the lower box portion positioned above the upper box portion in the upside-down condition of the motor-assisted bicycle can be easily removed from the upper box portion. When the lower box portion is removed, the gear mechanism is left and supported in the upper box portion opening upside. Accordingly, the gear mechanism can be easily seen to more facilitate the maintenance including the check of the lubricated condition and the oiling to the gear mechanism.

### BRIEF DESCRIPTION OF THE DRAWINGS

Fig. 1 is a rear elevational view of a motor unit in a conventional motor-assisted bicycle.

Fig. 2 is a general side view of a motor-assisted bicycle according to a preferred embodiment of the present invention.

Fig. 3 is a sectional view showing the inside structure of a gear box in the preferred embodiment.

Fig. 4 is a top plan view of a left box portion of the gear box.

Fig. 5 is a left side view of the left box portion.

Fig. 6 is a left side view of a right box portion of the gear box.

Fig. 7 is a cross section taken along the line VII-VII in Fig. 6.

Fig. 8 is a left side view of a lower box portion of the gear box.

Fig. 9 is a view taken in the direction of the arrow IX in Fig. 8.

Fig. 10 is a fragmentary side view showing the condition where the motor-assisted bicycle is supported upside down and the lower box portion is removed.

### Preferred Embodiment

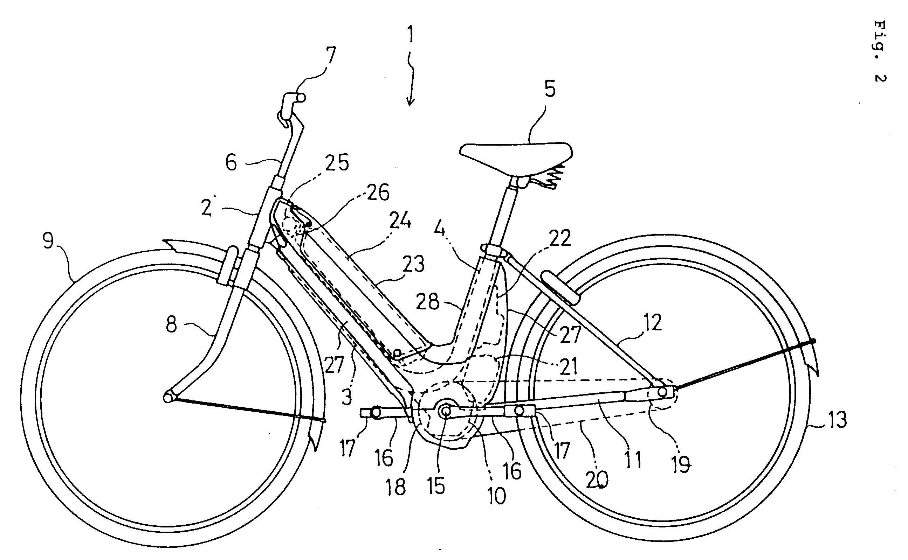

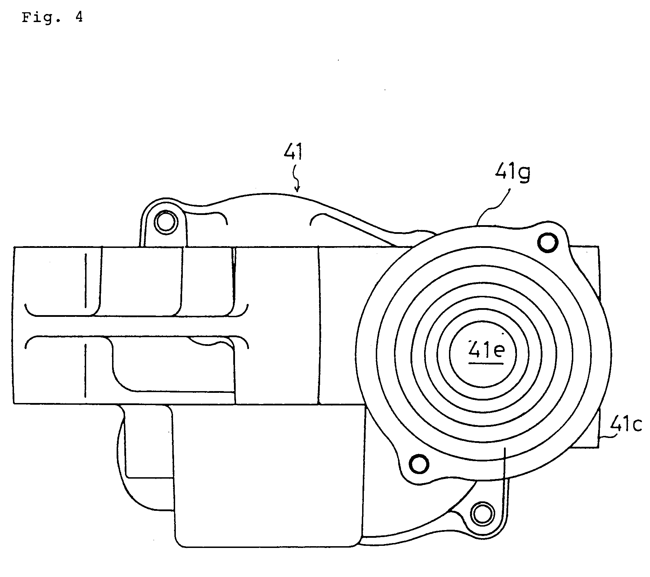

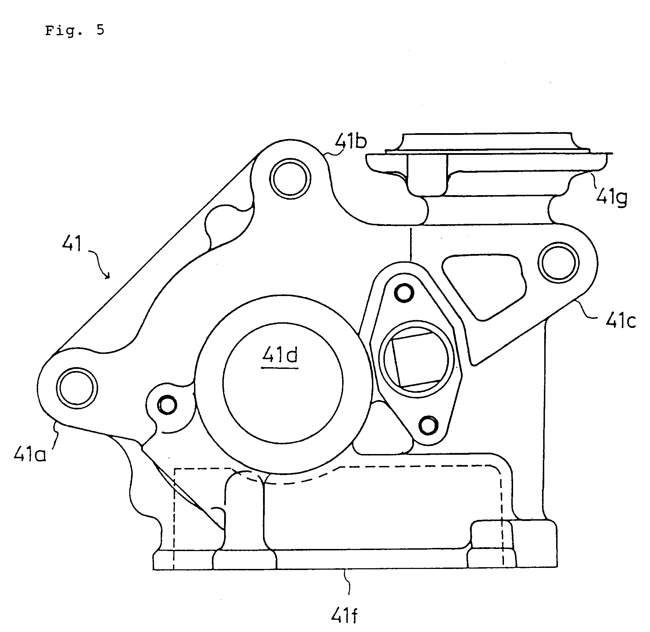

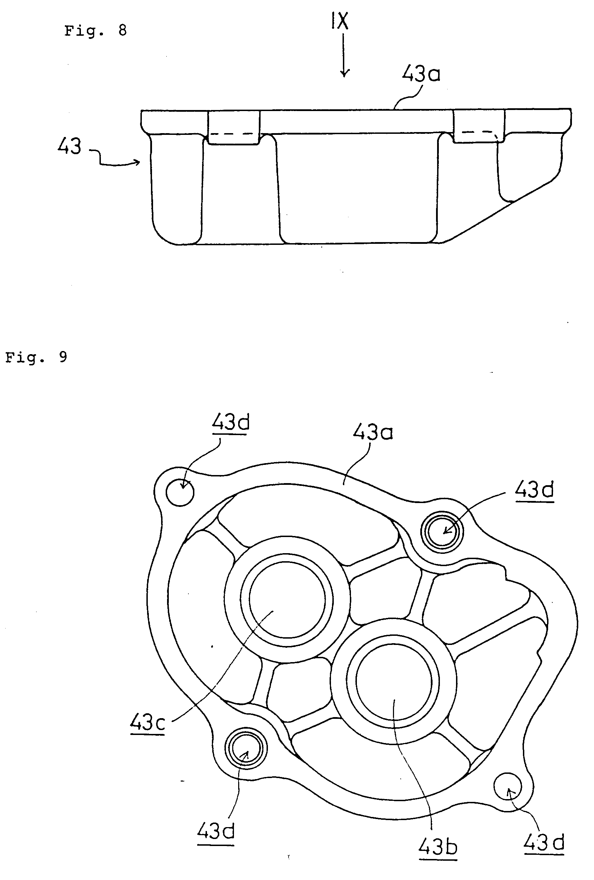

A preferred embodiment of the present invention will now be described with reference to Figs. 2 to 10.

Fig. 2 is a general side view of a motor-assisted bicycle 1 according to the preferred embodiment.

The motor-assisted bicycle 1 includes a head pipe 2, a down tube 3 extending rearward and downward from the head pipe 2, and a seat tube 4 extending rearward and upward from the lower end of the down tube 3 to a seat 5. Thus, the down tube 3 and the seat tube 4 constitute a V-shaped main frame bent at the lower end of the down tube 3.

A steering shaft 6 is pivotably supported to the head pipe 2, and a bar-shaped handle 7 is fixedly supported to the upper end of the steering shaft 6. A front fork 8 extends integrally from the lower end of the steering shaft 6, and a front wheel 9 is rotatably supported to the right and left lower ends of the front fork 8.

A gear box 10 storing a gear mechanism is suspendedly fixed to a V-shaped lower end portion of the main frame as the intersection between the down tube 3 and the seat tube 4. A rear fork 11 is fixed at its front end to the gear box 10 and extends rearward. The rear fork 11 is reinforced by a pair of right and left stays 12 extending between the right and left ends of the rear fork 11 and the seat tube 4. A rear wheel 13 is rotatably supported to the right and left rear ends of the rear fork 11.

The gear box 10 serves also as a crankcase to rotatably support a crankshaft 15. A pair of right and left crank arms 16 are fixed at their base ends to the opposite ends of the crankshaft 15, and a pair of right and left pedals 17 are provided at the outer ends of the pair of crank arms 16.

A chain 20 is wrapped around a drive sprocket 18 to be rotated by rotation of the crankshaft 15 and a driven sprocket 19 mounted on an axle of the rear wheel 13. When the crankshaft 15 is rotated by a depression force applied to the pedals 17, the rear wheel 13 is rotated through the drive sprocket 18, the chain 20, and the driven sprocket 19, thereby allowing the motor-assisted bicycle 1 to be traveled as a usual bicycle.

A motor 21 is fixed to the gear box 10 so as to be disposed along the seat tube 4. A driving force of the motor 21 is reduced in speed through the gear mechanism and then transmitted to the crankshaft 15, thereby assisting man power.

A control device 22 including an electronic control unit and a motor driver for controlling the operation of the motor 21 is mounted on the rear surface of the seat tube 4 at a position over the motor 21.

The down tube 3 and the seat tube 4 are covered with V-shaped, separated left and right side covers 27 and a center cover 28. An elongated battery case 23 is detachably mounted on the inclined upper surfaces of the side covers 27 and 28 at their front portions covering the down tube 3, and the battery case 23 itself forms a part of an outer surface of a vehicle body.

A bicycle traveling battery 24 consisting of a plurality of Ni-Cd cells for supplying electric power to the motor 21 is stored in the battery case 23.

A combination switch 25 is provided at a position before the battery case 23. The combination switch 25 serves also to drive a lock device 26 for locking the battery case 23 in its mounted condition.

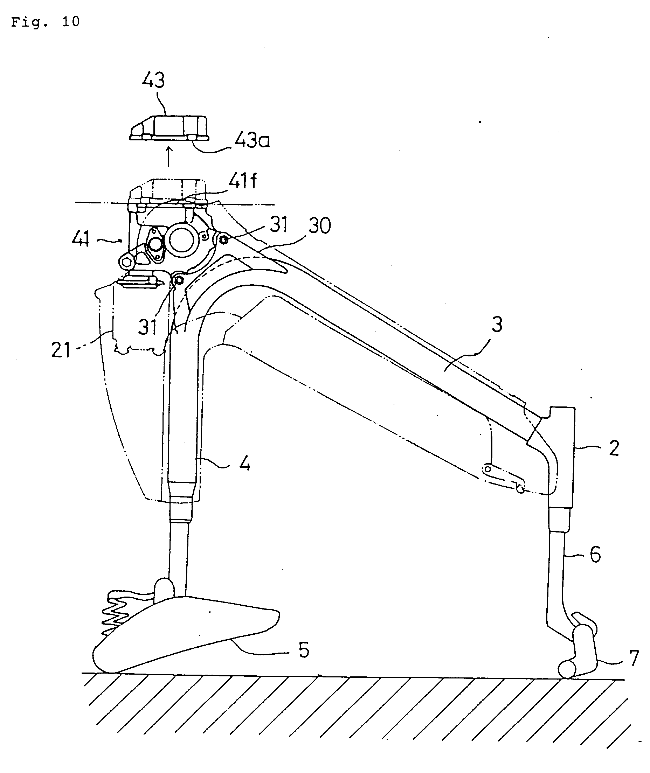

In the motor-assisted bicycle 1 mentioned above, a bracket 30 projects from a lowermost bent portion of the V-shaped main frame consisting of the down tube 3 and the seat tube 4 (see Fig. 10). The bracket 30 has two projecting portions at its front and rear positions, and the gear box 10 has two boss portions at its upper positions. The two boss portions of the gear box 10 are aligned with the two projecting portions of the bracket 30, and are fastened together by means of two bolts 31, thereby mounting the gear box 10 to the main frame.

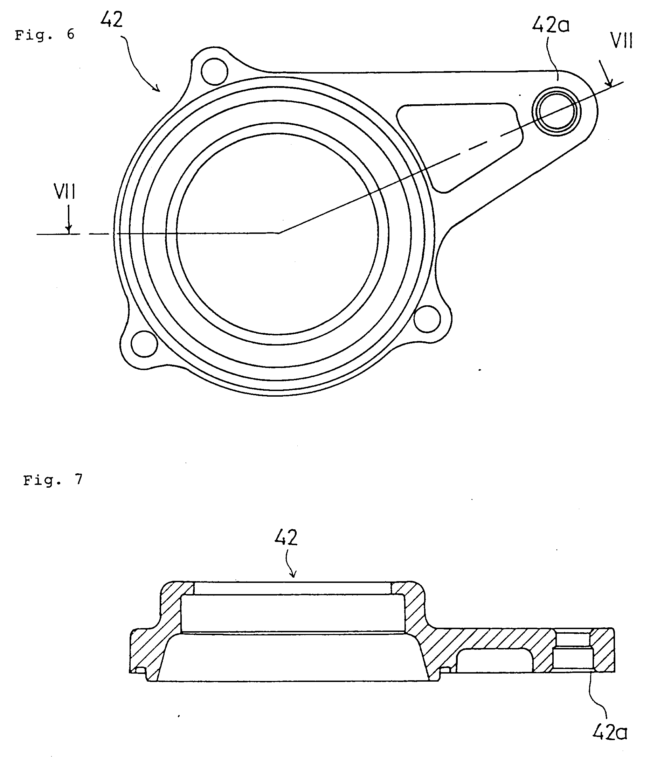

The gear box 10 itself is composed of a left box portion 41 forming a main portion, a right box portion 42 (see Figs. 6 and 7) closing a right side opening of the left box portion 41, and a lower box portion 43 closing a lower opening of the left box portion 41.

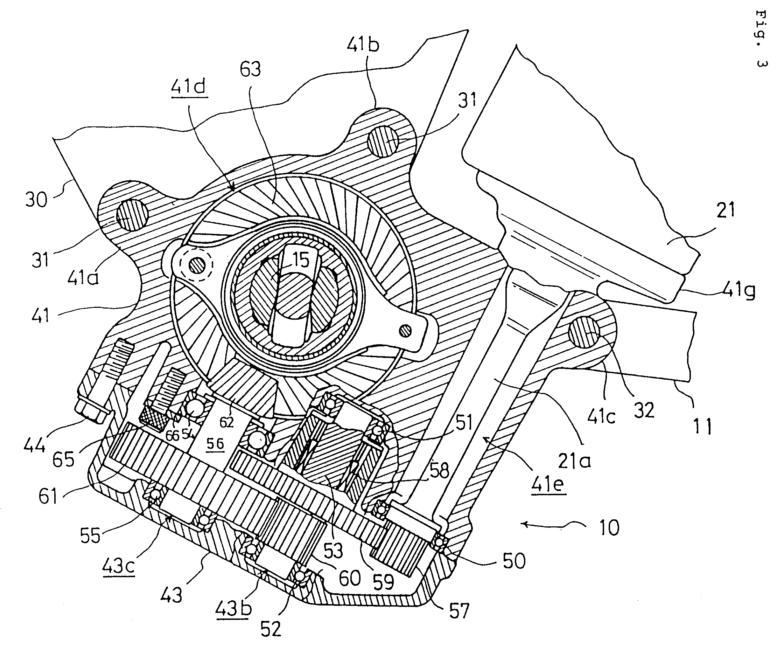

As shown in Figs. 3 to 5, two boss portions 41a and 41b formed at the front upper positions of the left box portion 41 are fixed to the bracket 30 by the bolts 31. A boss portion 41c formed at the rear upper position of the left box portion 41 and a boss portion 42a of the right box portion 42 are fixed together to the front end of the rear fork 11 by a bolt 32.

A circular hole 41d is formed at a central portion of the left box portion 41. The crankshaft 15 is inserted through the circular hole 41d, and a bevel gear 63 and the like are received in the circular hole 41d. A through hole 41e is formed through a rear portion of the left box portion 41 behind the circular hole 41d. An output shaft 21a of the motor 21 is inserted through the through hole 41e.

A parting surface 41f at the lower end of the left box portion 41 abutting against the upper end of the lower box portion 43 is formed in the same plane. A motor mounting portion 41g is formed at the upper end of the through hole 41e. Accordingly, the through hole 41e extends from the motor mounting portion 41g to the parting surface 41f. The output shaft 21a of the motor 21 mounted on the motor mounting portion 41g is inserted through the through hole 41e, and the lower end of the output shaft 21a is supported through a bearing 50 to the lower opening edge of the through hole 41e.

As shown in Figs. 3, 8, and 9, the lower box portion 43 has a parting surface 43a abutting against the parting surface 41f of the left box portion 41 formed at the lower end thereof. The lower box portion 43 is shaped so that an inside portion surrounded by the parting surface 43a forming an outer peripheral portion of the lower box portion 43 is projected downward. Two cylindrical recesses 43b and 43c are formed on the upper surface of the inside portion of the lower box portion 43, and four bolt holes 43d are formed through the outer peripheral portion of the lower box portion 43.

The parting surface 43a of the lower box portion 43 is fitted to the parting surface 41f of the left box portion 41, and four bolts 44 are inserted through the four bolt holes 43d. The four bolts 44 are tightened to thereby fix the lower box portion 43 to the left box portion 41.

Inside the gear box 10, a first intermediate shaft 53 is supported through a pair of bearings 51 and 52 to the left box portion 41 and the lower box portion 43, and a second intermediate shaft 56 is supported through a pair of bearings 54 and 55 to the left box portion 41 and the lower box portion 43. The bearings 52 and 55 are engaged with the cylindrical recesses 43b and 43c of the lower box portion 43.

The bearing 54 and its associated parts possibly falling away from the left box portion 41 are fixed by a holder plate 66 for holding the outer race of the bearing 54. The holder plate 66 is fixed to the lower end of the left box portion 41 by a bolt 65.

A gear 57 is fixedly mounted on the lower end of the output shaft 21a of the motor 21. The gear 57 meshes with a gear 59 supported through a one-way clutch 58 to the first intermediate shaft 53. A gear 60 is fixedly mounted on the first intermediate shaft 53. The gear 60 meshes with a gear 61 fixedly mounted on the second intermediate shaft 56.

A bevel gear 62 is fixedly mounted on the upper end of the second intermediate shaft 56. The bevel gear 62 meshes with the bevel gear 63 supported about the crankshaft 15. The bevel gear 63 can rotate the drive sprocket 18 through a sleeve (not shown).

Accordingly, when the motor 21 is driven, the torque of the output shaft 21a is transmitted through the four gears 57, 59, 60, and 61, the two bevel gears 62 and 63, and the sleeve to the drive sprocket 18, thereby assisting the man power propelling the bicycle.

When the motor-assisted bicycle 1 is turned upside down to be supported at the handle 7 and the seat 5 on a horizontal plane for the purpose of performing the maintenance of the gear mechanism, the gear box 10 comes to a position over the main frame as shown in Fig. 10. In such an upside-down position, the lower box portion 43 fixed to the left box portion 41 by the bolts 44 covers the left box portion 41 from the upper side thereof, and the parting surfaces 41f and 43a of the left box portion 41 and the lower box portion 43 are formed in a substantially horizontal plane.

Accordingly, the lower box portion 43 can be easily removed from the left box portion 41 for the maintenance. As shown in Fig. 10, the lower box portion 43 can be removed substantially directly above the left box portion 41. Accordingly, the bearings 52 and 55 can be easily removed from the cylindrical recesses 43b and 43c of the lower box portion 43. In this condition, the first intermediate shaft 53 and the second intermediate shaft 56 are left together with the gears 59, 60, and 61 inside the left box portion 41 opening upside, and are exposed to the outside of the gear box 10.

In this exposed condition, an operator can check a lubricated condition inside the gear box 10 at a glance, and can simply oil the gear box 10. Thus, the maintenance can be performed easily and reliably.

The removal of the lower box portion 43 possibly causes the removal of the second intermediate shaft 56 and its associated parts from the left box portion 41. However, since the bearing 54 fixedly mounted on the second intermediate shaft 56 is pressed on the left box portion 41 by the holder plate 66, the second intermediate shaft 56 and its associated parts can be reliably left inside the left box portion 41.

### Effect of the Invention.

The gear box is located at the lowermost portion of the vehicle body frame, and the gear box is dividable into the upper box portion and the lower box portion. Accordingly, the lower box portion can be easily removed from the upper box portion. In the condition where the lower box portion is removed, the gear mechanism supported in the upper box portion is substantially exposed to the outside of the gear box, thereby making the maintenance easy.

The lower box portion of the gear box is dividable from the upper box portion of the gear box along a substantially horizontal parting surface in a condition where the motor-assisted bicycle is turned upside down to be supported at a handle and a seat of the motor-assisted bicycle. With this arrangement, the lower box portion positioned above the upper box portion in the upside-down condition of the motor-assisted bicycle can be easily removed from the upper box portion. When the lower box portion is removed, the gear mechanism is left and supported in the upper box portion opening upside. Accordingly, the gear mechanism can be easily seen to more facilitate the maintenance including the check of the lubricated condition and the oiling to the gear mechanism.

Summarized the invention provids a gear box structure which allows an operator to easily and reliably perform the maintenance of a gear mechanism.

In a motor-assisted bicycle having a motor to use motive power of the motor for assisting man power propelling the bicycle; a gear box structure characterized in that a gear mechanism for reducing the motive power of the motor in speed and then transmitting it to a wheel is stored in a gear box 10, and the gear box 10 is located at a lowermost portion of a vehicle body frame 3, 4; and the gear box 10 is dividable into an upper box portion 41 supporting the gear mechanism and a lower box portion 43.

## Claims

1. In a motor-assisted bicycle having a motor to use motive power of said motor for assisting man power propelling said bicycle; a gear box structure characterized in that:
a gear mechanism for reducing said motive power of said motor (21) in speed and then transmitting it to a wheel is stored in a gear box (10), and said gear box (10) is located at a lowermost portion of a vehicle body frame (3,4); and
said gear box (10) is dividable into an upper box portion (41) supporting said gear mechanism and a lower box portion (43).

2. A gear box structure in a motor-assisted bicycle according to claim 1, wherein said lower box portion (43) of said gear box (10) is dividable from said upper box portion (41) of said gear box (10) along a substantially horizontal parting surface (41f,43a) in a condition where said motor-assisted bicycle is turned upside down to be supported at a handle (7) and a seat (5) of said motor-assisted bicycle (1).

## Patentansprüche

1. In einem Fahrrad mit Hilfsmotor mit einem Motor, wobei die Antriebskraft des Motors zum Unterstützen von das Fahrrad vorantreibender Muskelkraft dient, ist eine Getriebegehäusestruktur dadurch gekennzeichnet, daß:
ein Getriebemechanismus zur Drehzahlreduktion der Antriebskraft des Motors (21) und dann zu deren Übertragung auf ein Rad in einem Getriebegehäuse (10) aufgenommen ist, und wobei das Getriebegehäuse (10) an einem untersten Abschnitt eines Fahrzeughauptrahmens (3, 4) angeordnet ist; und
wobei das Getriebegehäuse (10) in einen den Getriebemechansimus haltenden oberen Gehäuseabschnitt (41) und einen unteren Gehäuseabschnitt (43) teilbar ist.

2. Getriebegehäusestruktur in einem Fahrrad mit Hilfsmotor nach Anspruch 1, wobei der untere Gehäuseabschnitt (43) des Getriebegehauses (10) von dem oberen Gehäuseabschnitt (41) des Getriebegehäuses (10) entlang einer im wesentlichen horizontalen Trennfläche (41f, 43a) in einem Zustand trennbar ist, in dem das Fahrrad mit Hilfsmotor umgedreht ist, sodaß es auf einem Handgriff (7) und einem Sitz (5) des Fahrrads mit Hilfsmotor (1) steht.

## Revendications

1. Dans une bicyclette à moteur auxiliaire équipée d'un moteur destinée à utiliser la puissance motrice dudit moteur pour fournir une assistance à la propulsion par la puissance humaine de ladite bicyclette ; une structure de boîte de vitesses caractérisée en ce que :
un mécanisme à roues dentées, conçu pour réduire la vitesse de rotation de ladite puissance motrice issue dudit moteur (21) puis la transmettre à une roue, est logé dans un carter de boîte de vitesses (10), et ledit carter de boîte de vitesses (10) est situé à une position la plus basse d'un cadre du véhicule (3, 4) ; et
ledit carter de boîte de vitesses (10) est divisible en une partie supérieure de carter (41) supportant ledit mécanisme à roue dentées et une partie inférieure de carter (43).

2. Une structure de boîte de vitesses, dans une bicyclette avec moteur auxiliaire selon la revendication 1, dans laquelle ladite partie inférieure de carter (43) de ladite boîte de vitesses (10) est divisible de ladite partie supérieure de carter (41) dudit carter de boîte de vitesses (10), suivant une surface de division (41f, 43a) sensiblement horizontale, dans un état dans lequel ladite bicyclette à moteur auxiliaire est retournée pour être supportée par un guidon (7) et un siège (5) de ladite bicyclette à moteur auxiliaire (1).
